# EUROPEAN PATENT SPECIFICATION

(11) **EP 1 387 525 B1**
(45) Date of publication and mention of the grant of the patent: **21.12.2016**
(21) Application number: 02360229.5
(22) Date of filing: 02.08.2002
(51) Int. Cl.: H04L 12/24, H04Q 3/00

(54) **A method for entering of commands for an operation and maintenance centre (OMC)**
Ein Verfahren zur Eingabe von Kommandos für ein Operations- und Wartungszentrum (OMC)
Une méthode pour entrer des commandes pour un centre d'opération et d'entretien (OMC)

(43) Date of publication of application: 04.02.2004
(73) Proprietor: ALCATEL LUCENT, 92100 Boulogne-Billancourt (FR)
(72) Inventor: Durand, Anne, 91620 La Ville du Bois (FR); Grossi, Thomas, 75019 Paris (FR)
(74) Representative: Wetzel, Emmanuelle

(56) References cited:
- EP-A- 0 791 880
- WO-A-99/16274
- DE-A- 19 947 083
- GB-A- 2 364 472
- US-A1- 2002 083 422
- SIEMENS AG: "Information, System, Q&M System for the BSS (TED:OMS-B); A30808-X3247-D20-3-7618", SIEMENS INFORMATION SYSTEM Q&M SYSTEM FOR THE BSS (TED:OMS-B), XX, XX, 1 January 1998 (1998-01-01), pages 1-80, XP002230672,

## Description

### Background and prior art

Operation and maintenance centers (OMCs) are as such known from the prior art for a variety of telecommunications systems. For example the GSM mobile telecommunications system specifies an OMC.

International Patent Application No. WO-A-94128644 discloses a typical radio communication system with base stations, at least one base station controller, and an OMC at the network side. The base station contains transceivers which are connected to an antenna unit, as well as a base-station-related local operations and maintenance unit. In the base station, a control unit handles the selective switching of a transceiver means to a communication connection. The transceivers can be automatically controlled either by the base station controller, the network-side OMC, or by the base-station-related operations and maintenance unit, so that they are in an operative state or in a stop state, respectively.

US-patent 6,360,106 shows a base station for a radio communications system. A controller of the base station performs monitoring and organization of the transceivers. An OMC belongs to the mobile radio system, in which center a management of the configuration, the software, and the performance parameters, as well as the management of the arising errors is carried out. To this end, error messages and messages about operational and performance conditions of the components of the mobile radio system arrive in the OMC.

UK Patent Application GB 2 364 472 A discloses a generic module to facilitate extension of a network management portal. The portal provides a centralized view into the overall health of the network. The portal can be non-programmatically extended.

German Patent Application DE 199 47 983 A1 discloses a method for configuring a telecommunication network having plural network regions using a management network having a network management centre and at least one operation and maintenance center for controlling a respective network region. The network management center transmits a command file in a common command syntax to the operation and maintenance center of a network region. The operations and maintenance centre converts the command file into a script file particular to the network region. The script file is transmitted to network elements that complete the commands contained in the script file.

The main functionality of the OMC is to evaluate the data of the individual base stations such that a continuous radio-technical coverage is ensured over the entire extent of the mobile radio network and replacement and change over mechanisms are controlled for the failure of individual transceivers. This is called Configuration Management. In general one OMC can manage the entire mobile radio system or only subcomponents of the mobile radio system.

US statutory invention registration H 1,896 shows a network management system server and method for operation for a telecommunications system. The network management system integrates the functionality of an OMC.

A variety of OMCs is commercially available for different kinds of telecommunications systems such as GSM and UMTS. Typically an OMC provides a user interface to enable an operator to monitor network performance, capacity, security and configuration. The user interface serves to display network element state and parameter values, network overviews by category and network geography as well as object relationships.

The main function is configuration management. This enables an operator to access and modify network elements and parameters. The other functions of a typical OMC are fault management, performance management and security management. Each function needs to operate on an individual or a set of network elements.

In prior art operation and maintenance centers a user needs to manually input individual commands which can be a tedious task. Further, this requires detailed knowledge about commands and command parameters of each user.

It is therefore an object of the present invention to provide an improved method for entering of commands for an operation and maintenance center. Further it is an object of the present invention to provide an improved computer program product for entering of commands, an operation and maintenance center and a telecommunication system.

### Summary of the invention

The present invention provides for an improved method for entering of commands for an operation and maintenance center as claimed in independent claim 1. Further the invention provides an improved computer program product, operation maintenance center and telecommunication system as claimed in the respective independent claims. Preferred embodiments of the invention are set forth in the dependent claims.

In accordance with a preferred embodiment of the invention a macro is defined by entering a set of commands. The set of commands forms the basis for the creation of a mark-up language file, such as an XML file. The XML file is descriptive of the macro containing the set of commands. For execution of the set of commands comprised in the macro the user only needs to enter the macro name.

In accordance with a further preferred embodiment of the invention a graphical user interface is used for entering the set of commands. The graphical user interface has a predefined hierarchical list of commands from which the user can select a command. When the user has entered a selection of one of the commands from the predefined hierarchical list a table is displayed showing detailed information relating to the command.

For example the table shows a variety of conditions which need to be fulfilled as a prerequisite for execution of the command. One or more of the entries into the table can be edited to adapt the command to the users needs. For example the user may need to specify the network element to which the selected command is related.

In accordance with a further preferred embodiment of the invention a symbol is displayed on the graphical user interface to symbolize the selected command. The symbol can be connected with other symbols to constitute a flow chart.

When the flow chart has been completed the user invokes a command to save the macro he or she has inputted by means of the flow chart in order to generate a mark-up language file being descriptive of the flow chart and the commands contained in the flow chart.

In accordance with a further preferred embodiment of the invention user inputs are recorded to define the macro. This means that all user actions during the recording time are tracked and stored in order to identify the set of commands of the macro. After having captured the user inputs during the recording time again a save command is invoked to generate a mark-up language file to describe the macro.

In accordance with a further preferred embodiment of the invention the macro comprises synchronous commands and asynchronous commands. Synchronous commands are executed immediately. In contrast asynchronous commands take a considerable execution time. All commands of a macro are executed in sequential order. If an asynchronous command is executed processing of the following command in the sequence is only started after the asynchronous command has returned a signal to indicate completion of the execution of the asynchronous command.

In accordance with a further preferred embodiment of the invention the operation and maintenance center contains a server and a client component. The client component serves for entering the commands to define the macros, to generate the mark-up language files and to locally store the mark-up language files.

### Brief description of the drawings

In the following the invention will be explained in greater detail by making reference to the drawings in which:
- Figure 1: is a block diagram of a telecommunication system comprising an operation and maintenance center with a client component,
- Figure 2: is an example of a graphical user interface (GUI) for entering of commands for an operation and maintenance center,
- Figure 3: is illustrative of a flow chart for the creation of XML files being descriptive of commands which have been input via the GUI,
- Figure 4: is illustrative of a flow chart for creation of XML files based on the recording of user commands,
- Figure 5: is illustrative of a flow chart for the execution of a macro.

### Detailed description

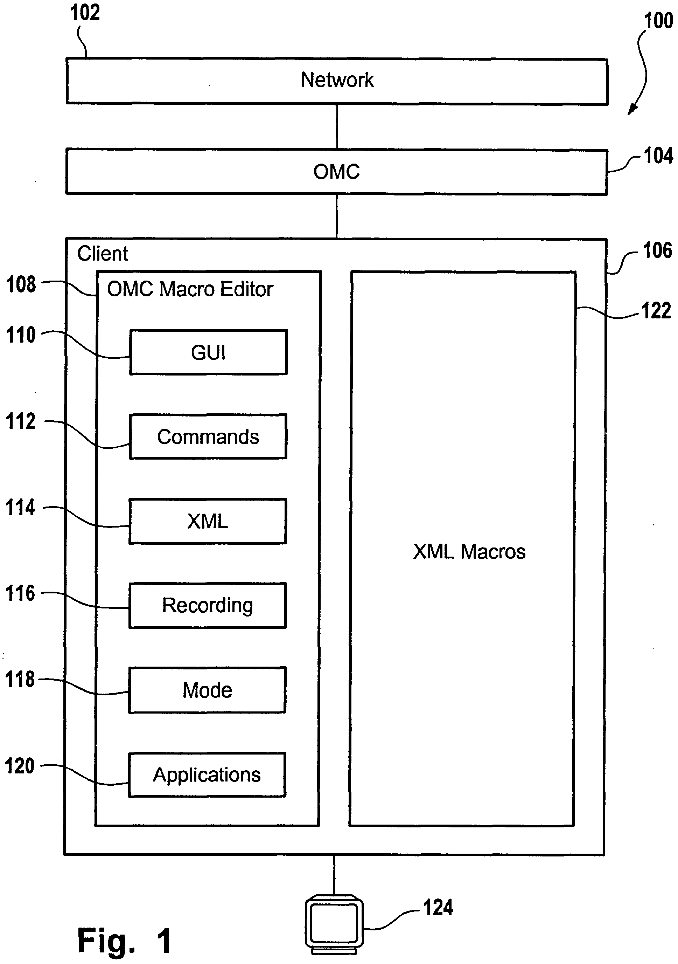

Figure 1 shows a telecommunication system 100 having a telecommunication network 102. The telecommunication network 102 can be of any type, such as a digital mobile telecommunication network in accordance with the GSM or UTMS standards.

An operation and maintenance center (OMC) 104 is coupled to the network 102. The OMC 104 has a client 106, which can be a personal computer with a UNIX or windows platform.

The client 106 has an OMC macro editor 108. The OMC macro editor 108 has a graphical user interface (GUI) 110. The graphical user interface 110 serves as an editor for creating new macros, editing existing ones, saving, combining and executing macros.

Further the OMC macro editor 108 has a module 112 for storing of a predefined hierarchical list of commands.

Further the OMC macro editor 108 has a module 114 for generating of XML files which are descriptive of a macro definition which has been entered by a user.

Module 116 serves to record user inputs during a certain recording time frame. The recorded user inputs form the basis for the generation of an XML file by means of module 114.

Module 118 serves to define the mode of operation of the OMC macro editor 108. For example there are three modes of operation:
(i) inputting of commands via the GUI 110 in symbolic form,
(ii) recording a user's input and
(iii) the command mode for the execution of commands and macros.

Further there can be a variety of applications 120 for a number of network management tasks. The XML files which are generated by the module 114 are stored in memory 122 of the client 106.

The client has a display unit 124 for the GUI 110. When a user has selected the mode (i) by means of module 118 he or she can enter a set of commands in a symbolic way in order to define a macro. When the definition of the macro is complete the module 114 is started in order to generate the corresponding XML file. The XML file is given a name and stored in memory 122.

When the user has selected the mode (ii) all user actions are recorded by means of module 116. The recorded user inputs define a macro. Again the module 114 is used to generate a corresponding XML file.

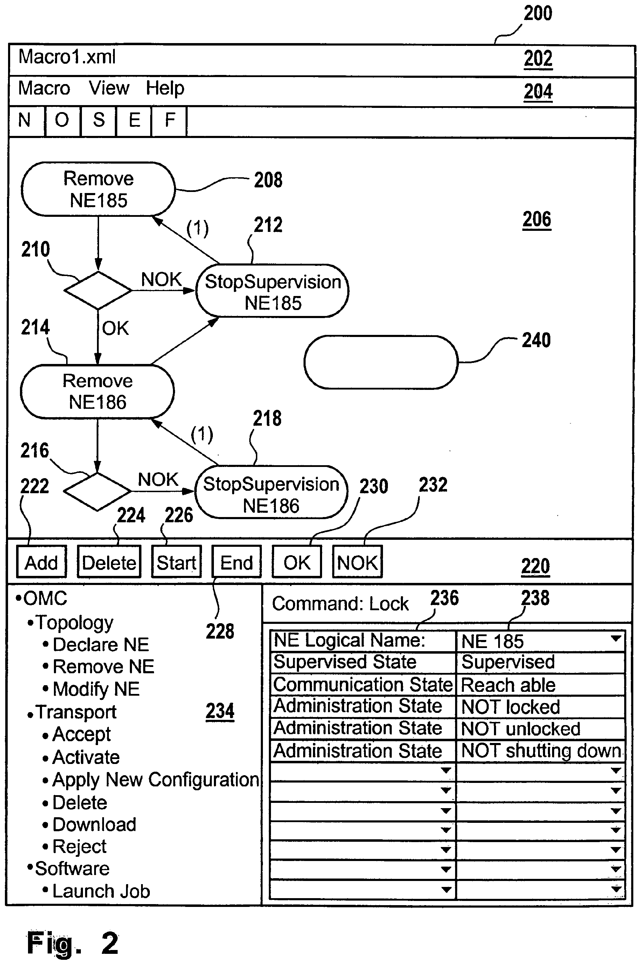

Figure 2 shows an implementation example for the graphical user interface 110 of figure 1. The GUI 110 generates a window 200 which is displayed on display unit 124. The window 200 has a header 202 which shows the name of the macro which is processed. The name of the macro is "macro1.xml" in the example considered here.

Below header 202 there is an action bar 204 with the elements "macro", "view" and "help". The element "macro" enables a user to open an existing macro or to create an empty file for inputting of a new macro.

Further the window 200 has a section 206 which serves to display a flow chart of the macro definition. In the example considered here the flow chart starts with the command 208 "remove NE 185". This command serves to remove the network element (NE) number 185 from the network 102 (cf. figure 1).

After command 208 there is a decision command 210. When a condition of the command 210 is not fulfilled ("NOK"), the next step is command 212. The command 212 serves to "stop supervision of NE 185". From command 212 the control goes back to command 208. The symbol "(1)" on the arrow linking the command 212 and the command 208 indicates that this loop is only to be performed once. When the condition of command 210 is not met another time the control again goes to command 212 but it does not go to command 208 again. Rather the execution stops with command 212 in this case.

When the condition of command 210 is met ("OK") the control goes to command 214. Command 214 corresponds to command 208 but relates to NE 186. Likewise the further commands 216 and 218 correspond to commands 210 and 212 with respect to NE 186.

Below section 206 there is a section 220 with a number of virtual buttons. Button 222 serves to add a command to the flow chart within section 206, button 224 serves to delete a command, button 226 serves to start a recording, button 228 serves to end a recording, button 230 serves to enter "OK" and button 232 serves to enter "NOK".

Section 234 of window 200 shows a predefined hierarchical list of commands. The user can navigate through the list and select one of the commands, such as the command "Lock". When the user selects the command "Lock" in the hierarchical list of section 234 table 236 is displayed. The table 236 has a field 238 which can be edited. In this example the field 238 serves to enter the network unit for which the command is to be carried out.

The other entries within table 236 define three conditions for the execution of the commands. For example the network element NE 185 needs to have the "supervised state" of "supervised", the "communication state" of "reachable", "administration state" needs to be "NOT locked" etc. These conditions must be met before the command can be executed. It is important to note that only editable fields within table 236 need to be filled out by a user and that the other fields have predefined parameters. This way the amount of data which needs to be entered manually by a user is minimized.

When the user wants to complete the macro as shown in section 206 he or she needs to select a command from the hierarchical list of section 234 such that table 236 for this command is shown. The user can make the required entries into the table and then click button 222. When the user clicks on button 222 an additional command symbol 240 appears within section 206. The user can then connect the symbol 240 to one of the commands 208 to 218 which have been previously entered in order to complete the macro definition.

Alternatively the user can click on button 226 to start a recording. During the recording all user input actions are tracked. The recording is ended by clicking on button 228. The user input actions performed during the time of the recording define the macro to be created.

To save the macro the user chooses "save" or "save as" from the macro menu of action bar 204. This way the macro definition is converted into an XML file and saved.

After saving the macro, the user can start the macro by choosing the "execute" menu item from the macro menu. The follow-up window will display the list of commands as they are executed, their errors and their progress. Upon successful completion of a command the next command is started once its preconditions are fulfilled.

However, once a XML file is created, the macro can be started on the command line without starting the graphical user interface of the application. The outputs of the execution are locked in a file.

Preferably the OMC macro editor 108 (cf. figure 1) is written in Java. A Corba interface is used for communication with the OMC server 104. The OMC macro editor 108 can be started on a UNIX or Windows platform.

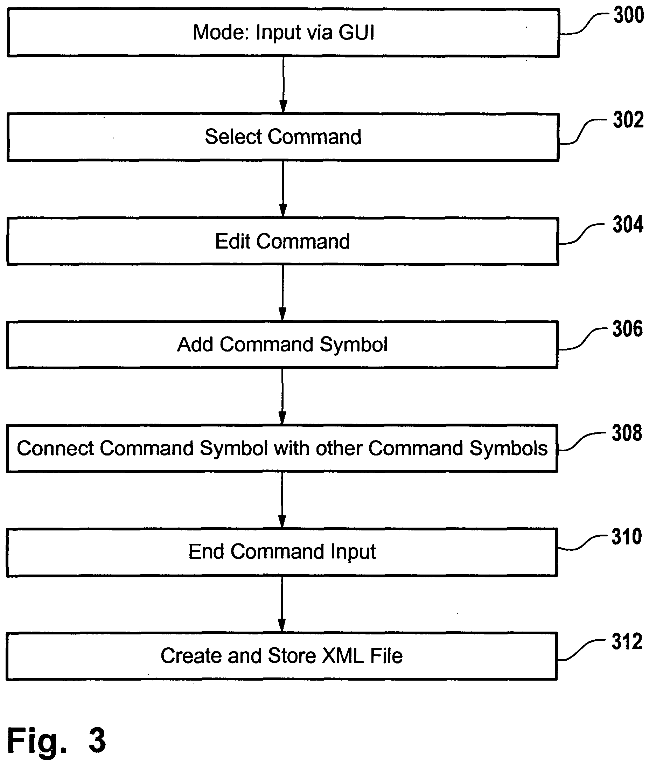

Figure 3 shows a flow chart for entering of a macro definition via the GUI 110.

In step 300 the corresponding mode (i) is selected (cf. module 118 of figure 1). In step 302 a command is selected from the hierarchical list of commands (cf. module 112 of figure 1 and section 234 of figure 2).

In response a table (cf. table 236 of figure 2) is displayed. Apart from the preconditions the table can have one or more of the following entries as listed below:

| **Column** | **Description** |
|---|---|
| Num | The order in which the command is executed in the macro. This number is filled in as new commands are added to the macro. |
| Preconditions | The required preconditions and those added by the user that state the conditions that must be fulfilled before a command will be executed. |
| Command | The command name |
| Parameters | The parameters entered by the user. |
| OK | The command number that will be executed next if this command's execution is successful. |
| Not OK | The command number that will be executed next if this command's execution is not successful. |

The user enters the parameters and adds additional preconditions if desired in step 304. An additional precondition consists of an attribute that has a state. The precondition can state that the attribute has to have or should not have this state in order to start the command execution.

Once the user has completed the list of parameters and preconditions, he or she clicks the "add" button 222 to add the command t to the command diagram that will execute in this macro in step 306.

It is important to note that a user can also add a macro rather than a command. This way macros which have been defined previously can be reused for the definition of more complex macros comprising other macros and / or commands.

Generally a command is defined by its type, parameters and preconditions. A command is executed only if its preconditions are fulfilled. The command returns a boolean value "OK" when it has been executed successfully and "NOK" otherwise.

The language that is used to define a macro is a visual one in the input mode considered here. When a command is added it is visualized by a symbol, such as by symbol 240 of figure 2. An arrow is used as the symbol for a transition between two statements.

An iteration threshold number can be associated with an arrow. With each iteration an iteration counter is incremented. When the iteration counter has reached the threshold level no further iteration is possible.

In step 308 the user connects the additional command symbol which has been added in step 306 to another command symbol of a previously entered command by means of an arrow. As an option the user can associate an iteration threshold number with the arrow.

In step 310 the user completes the definition of the macro such as by choosing "save" from the macro menu. This invokes a save operation which creates an XML file which is descriptive of the macro definition. The XML file is then stored. This is done in step 312.

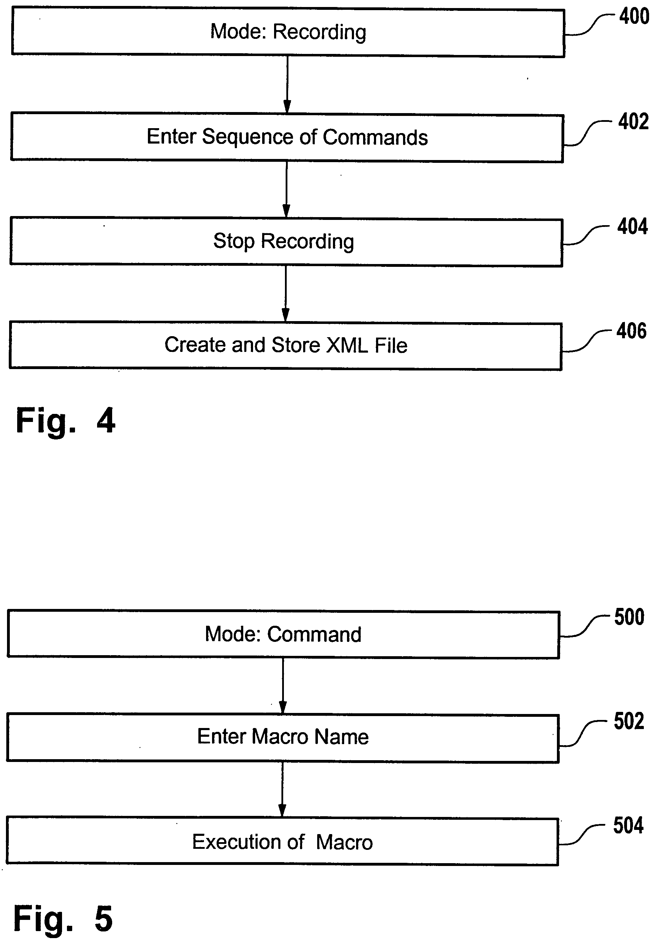

Figure 4 shows a flow chart being illustrative of the definition of a macro by means of recording. In step 400 the user selects the recording mode (cf. module 118 figure 1). In step 402 the user enters a sequence of commands which define the macro. The commands are not executed but tracked for the purpose of the macro definition.

For example the user selects "record" from the macro menu (cf. action bar 204 of figure 2). The recording is started by pressing button 226 (cf. figure 2).

This sends a Start Recording NAV command to all the client applications on the current machine to let them know that they are now in a recording mode. The fact that they are in a recording mode is displayed in the client application. The user then executes an operation in the client application, such as declaring a NE. Once the operation is executed, instead of sending the command to the server, the command is sent by NAV to the OMC Macro Editor who then adds it to the current list of commands in the new macro. The commands are added in the order in which they are received by the OMC Macro Editor.

To stop the recording the user presses button 228. This sends a NAV command to all the client applications on the same machine to no longer be in the stop recording mode. At this point the user may edit the new macro and / or save it. Once it is saved it may be executed.

Saving the macro means that it is first converted into an XML file and then saved in memory 122 (cf. figure 1).

The end of the recording is entered in step 404; the creation and the storage of the corresponding XML file is done in step 406.

Figure 5 illustrates the command mode. In step 500 the user selects the command mode by selecting "execute" from the macro menu. In step 502 the user is prompted to enter the macro name. After the macro name has been entered the macro is executed in step 504 without further user interaction.

### list of reference numerals

- telecommunication system: 100
- telecommunication network: 102
- operation and maintenance center: 104
- client: 106
- OMC macro editor: 108
- GUI: 110
- module: 112
- module: 114
- module: 116
- module: 118
- applications: 120
- memory: 122
- display unit: 124
- window: 200
- header: 202
- action bar: 204
- section: 206
- command: 208
- command: 210
- command: 212
- command: 214
- command: 216
- command: 218
- section: 220
- button: 222
- button: 224
- button: 226
- button: 228
- button: 230
- button: 232
- section: 234
- table: 236
- field: 238
- symbol: 240

## Claims

1. A method for entering of commands (112) for an operation and maintenance center (104), the method comprising the steps of:
- entering (300, 302, 304, 306, 308, 310) a set of commands to define a macro, wherein the step of entering the commands comprises:
a) selecting (302) a first command (312) from a predefined hierarchical list of commands,
b) editing (304) the first command,
c) displaying a first symbol being representative of the first command on a graphical user interface (110),
d) connecting on the graphical user interface the first symbol with at least a second symbol, the second symbol being representative of a second command of the predefined hierarchical list of commands,
the method further comprising the steps of:
- creating (312) a mark-up language file being descriptive of the macro,
- storing (312) the mark-up language file.

2. The method of claim 1, the mark-up language being extended mark-up language (XML).

3. The method of claim 1, further comprising recording (400, 402, 404) of the set of commands which is entered by a user to define the macro.

4. The method of claim 1 further comprising starting (504) the macro by entering (502) the name of the corresponding mark-up language file.

5. The method of claim 1, the macro comprising synchronous commands and asynchronous commands, further comprising executing the commands in sequential order, whereby processing of a command which follows an asynchronous command is only started when the asynchronous command returns a signal being indicative of the completion of the execution of the asynchronous command.

6. A computer program product, such as a digital storage medium, comprising program means (106) for entering of commands for an operation and maintenance center (104),
the program means (106) being adapted to perform the steps of:
- entering (300, 302, 304, 306, 308, 310) a set of commands to define a macro, wherein the step of entering the commands comprises:
a) selecting (302) a first command (312) from a predefined hierarchical list of commands,
b) editing (304) the first command,
c) displaying a first symbol being representative of the first command on a graphical user interface (110),
d) connecting on the graphical user interface the first symbol with at least a second symbol, the second symbol being representative of a second command of the predefined hierarchical list of commands,
the program means (106) being further adapted to perform the steps of:
- creating (312) a mark-up language file being descriptive of the macro,
- storing (312) the mark-up language file.

7. An operation and maintenance center (104) for the execution of commands relating to the operation and maintenance (104) of a telecommunication system, the operation and maintenance center comprising:
- means (108, 110, 112, 116, 118; 200, 206, 234, 236) for entering a set of commands to define a macro, wherein the means for entering comprise the means for:
a) selecting (302) a first command (312) from a predefined hierarchical list of commands,
b) editing (304) the first command,
c) displaying a first symbol being representative of the first command on a graphical user interface (110),
d) connecting on the graphical user interface the first symbol with at least a second symbol, the second symbol being representative of a second command of the predefined hierarchical list of commands,
the operation and maintenance center further comprising:
- means (312) for creating a mark-up language file being descriptive of the macro,
- means (312) for storing the mark-up language file.

8. The operation and maintenance center of claim 7 comprising a server component (104) and a client component (106), the client component being adapted to store the mark-up language files.

9. A telecommunication system comprising a telecommunications network (102) and an operation and maintenance center (104, 106) for the execution of commands relating to the operation and maintenance of the telecommunication network, the operation and maintenance center comprising:
- means (108, 110, 112, 116, 118; 200, 206, 234, 236) for entering a set of commands to define a macro, wherein the means for entering comprise the means for:
a) selecting (302) a first command (312) from a predefined hierarchical list of commands,
b) editing (304) the first command,
c) displaying a first symbol being representative of the first command on a graphical user interface (110),
d) connecting on the graphical user interface the first symbol with at least a second symbol, the second symbol being representative of a second command of the predefined hierarchical list of commands,
the operation and maintenance center further comprising:
- means (312) for creating a mark-up language file being descriptive of the macro,
- means (312) for storing the mark-up language file.

## Patentansprüche

1. Verfahren zur Eingabe von Kommandos (112) für ein Betriebs- und Wartungszentrum (104), wobei das Verfahren folgende Schritte umfasst:
- Eingeben (300, 302, 304, 306, 308, 310) einer Reihe von Kommandos, um ein Makro zu definieren, wobei der Schritt des Eingebens der Kommandos Folgendes umfasst:
a) Auswählen (302) eines ersten Kommandos (312) aus einer vorausdefinierten hierarchischen Kommandoliste,
b) Bearbeiten (304) des ersten Kommandos,
c) Anzeigen eines ersten Symbols, das für das erste Kommando bezeichnend ist, auf einer grafischen Benutzeroberfläche (110),
d) Verbinden, auf der grafischen Benutzeroberfläche, des ersten Symbols mit mindestens einem zweiten Symbol, wobei das zweite Symbol für ein zweites Kommando der vorausdefinierten hierarchischen Kommandoliste bezeichnend ist,
wobei das Verfahren weiterhin folgende Schritte umfasst:
- Erstellen (312) einer Auszeichnungssprachdatei, die für das Makro beschreibend ist,
- Speichern (312) der Auszeichnungssprachdatei.

2. Verfahren nach Anspruch 1, wobei die Auszeichnungssprache eine erweiterte Auszeichnungssprache (XML) ist.

3. Verfahren nach Anspruch 1, weiterhin umfassend das Aufzeichnen (400, 402, 404) der Reihe von Kommandos, die von einem Benutzer eingegeben wird, um das Makro zu definieren.

4. Verfahren nach Anspruch 1, weiterhin umfassend das Starten (504) des Makros durch Eingeben (502) des Namens der entsprechenden Auszeichnungssprachdatei.

5. Verfahren nach Anspruch 1, wobei das Makro synchrone Kommandos und asynchrone Kommandos umfasst, weiterhin umfassend das Ausführen der Kommandos in fortlaufender Reihenfolge, wobei die Verarbeitung eines Kommandos, das einem asynchronen Kommando folgt, nur gestartet wird, wenn das asynchrone Kommando ein Signal zurücksendet, das bezeichnend ist für den Abschluss der Ausführung des asynchronen Kommandos.

6. Computerprogrammprodukt, wie etwa ein digitales Speichermedium, umfassend Programmmittel (106) zur Eingabe von Kommandos für ein Betriebs- und Wartungszentrum (104),
wobei die Programmmittel (106) angepasst sind, um folgende Schritte durchzuführen:
- Eingeben (300, 302, 304, 306, 308, 310) einer Reihe von Kommandos, um ein Makro zu definieren, wobei der Schritt des Eingebens der Kommandos Folgendes umfasst:
a) Auswählen (302) eines ersten Kommandos (312) aus einer vorausdefinierten hierarchischen Kommandoliste,
b) Bearbeiten (304) des ersten Kommandos,
c) Anzeigen eines ersten Symbols, das für das erste Kommando bezeichnend ist, auf einer grafischen Benutzeroberfläche (110),
d) Verbinden, auf der grafischen Benutzeroberfläche, des ersten Symbols mit mindestens einem zweiten Symbol, wobei das zweite Symbol für ein zweites Kommando der vorausdefinierten hierarchischen Kommandoliste bezeichnend ist,
wobei die Programmmittel (106) weiterhin angepasst sind, um folgende Schritte durchzuführen:
- Erstellen (312) einer Auszeichnungssprachdatei, die für das Makro beschreibend ist,
- Speichern (312) der Auszeichnungssprachdatei.

7. Betriebs- und Wartungszentrum (104) für die Ausführung von Kommandos in Zusammenhang mit dem Betrieb und der Wartung (104) eines Telekommunikationssystems, wobei das Betriebs- und Wartungszentrum Folgendes umfasst:
- Mittel (108, 110, 112, 116, 118; 200, 206, 234, 236) zum Eingeben einer Reihe von Kommandos, um ein Makro zu definieren, wobei die Mittel zum Eingeben Mittel für Folgendes umfassen:
a) Auswählen (302) eines ersten Kommandos (312) aus einer vorausdefinierten hierarchischen Kommandoliste,
b) Bearbeiten (304) des ersten Kommandos,
c) Anzeigen eines ersten Symbols, das für das erste Kommando bezeichnend ist, auf einer grafischen Benutzeroberfläche (110),
d) Verbinden, auf der grafischen Benutzeroberfläche, des ersten Symbols mit mindestens einem zweiten Symbol, wobei das zweite Symbol für ein zweites Kommando der vorausdefinierten hierarchischen Kommandoliste bezeichnend ist,
wobei das Betriebs- und Wartungszentrum weiterhin Folgendes umfasst:
- Mittel (312) zum Erstellen einer Auszeichnungssprachdatei, die für das Makro beschreibend ist,
- Mittel (312) zum Speichern der Auszeichnungssprachdatei.

8. Betriebs- und Wartungszentrum nach Anspruch 7, umfassend eine Serverkomponente (104) und eine Client-Komponente (106), wobei die Client-Komponente zum Speichern der Auszeichnungssprachdateien angepasst ist.

9. Telekommunikationssystem, umfassend ein Telekommunikationsnetz (102) und ein Betriebs- und Wartungszentrum (104, 106) für die Ausführung von Kommandos in Zusammenhang mit dem Betrieb und der Wartung des Telekommunikationsnetzes, wobei das Betriebs- und Wartungszentrum Folgendes umfasst:
- Mittel (108, 110, 112, 116, 118; 200, 206, 234, 236) zum Eingeben einer Reihe von Kommandos, um ein Makro zu definieren, wobei die Mittel zum Eingeben Mittel für Folgendes umfassen:
a) Auswählen (302) eines ersten Kommandos (312) aus einer vorausdefinierten hierarchischen Kommandoliste,
b) Bearbeiten (304) des ersten Kommandos,
c) Anzeigen eines ersten Symbols, das für das erste Kommando bezeichnend ist, auf einer grafischen Benutzeroberfläche (110),
d) Verbinden, auf der grafischen Benutzeroberfläche, des ersten Symbols mit mindestens einem zweiten Symbol, wobei das zweite Symbol für ein zweites Kommando der vorausdefinierten hierarchischen Kommandoliste bezeichnend ist,
wobei das Betriebs- und Wartungszentrum weiterhin Folgendes umfasst:
- Mittel (312) zum Erstellen einer Auszeichnungssprachdatei, die für das Makro beschreibend ist,
- Mittel (312) zum Speichern der Auszeichnungssprachdatei.

## Revendications

1. Procédé pour l'entrée de commandes (112) pour un centre d'exploitation et de maintenance (104), le procédé comprenant les étapes suivantes :
- entrer (300, 302, 304, 306, 308, 310) un ensemble de commandes pour définir une macro, l'étape d'entrée des commandes comprenant les étapes suivantes :
a) sélectionner (302) une première commande (312) parmi une liste hiérarchique prédéfinie de commandes,
b) éditer (304) la première commande,
c) afficher un premier symbole qui est représentatif de la première commande sur une interface utilisateur graphique (110),
d) relier sur l'interface utilisateur graphique le premier symbole à au moins un second symbole, le second symbole étant représentatif d'une seconde commande de la liste hiérarchique prédéfinie de commandes,
le procédé comprenant en outre les étapes suivantes :
- créer (312) un fichier en langage de balisage qui est descriptif de la macro,
- stocker (312) le fichier en langage de balisage.

2. Procédé selon la revendication 1, le langage de balisage étant un langage de balisage étendu (XML).

3. Procédé selon la revendication 1, comprenant en outre l'enregistrement (400, 402, 404) de l'ensemble de commandes qui est entré par un utilisateur pour définir la macro.

4. Procédé selon la revendication 1, comprenant en outre le démarrage (504) de la macro en entrant (502) le nom du fichier en langage de balisage correspondant.

5. Procédé selon la revendication 1, la macro comprenant des commandes synchrones et des commandes asynchrones, comprenant en outre l'exécution des commandes dans un ordre séquentiel, moyennant quoi le traitement d'une commande qui suit une commande asynchrone n'est démarré que lorsque la commande asynchrone retourne un signal indiquant l'achèvement de l'exécution de la commande asynchrone.

6. Produit de programme informatique, tel qu'un support de stockage numérique, comprenant des moyens de programme (106) pour l'entrée de commandes pour un centre d'exploitation et de maintenance (104),
les moyens de programme (106) étant adaptés pour effectuer les étapes suivantes :
- entrer (300, 302, 304, 306, 308, 310) un ensemble de commandes pour définir une macro, l'étape d'entrée des commandes comprenant les étapes suivantes :
a) sélectionner (302) une première commande (312) parmi une liste hiérarchique prédéfinie de commandes,
b) éditer (304) la première commande,
c) afficher un premier symbole qui est représentatif de la première commande sur une interface utilisateur graphique (110),
d) relier sur l'interface utilisateur graphique le premier symbole à au moins un second symbole, le second symbole étant représentatif d'une seconde commande de la liste hiérarchique prédéfinie de commandes,
les moyens de programme (106) étant en outre adaptés pour effectuer les étapes suivantes :
- créer (312) un fichier en langage de balisage qui est descriptif de la macro,
- stocker (312) le fichier en langage de balisage.

7. Centre d'exploitation et de maintenance (104) pour l'exécution de commandes relatives au centre d'exploitation et de maintenance (104) d'un système de télécommunication, le centre d'exploitation et de maintenance comprenant :
- des moyens (108, 110, 112, 116, 118; 200, 206, 234, 236) pour entrer un ensemble de commandes pour définir une macro, les moyens pour entrer comprenant les moyens pour :
a) sélectionner (302) une première commande (312) parmi une liste hiérarchique prédéfinie de commandes,
b) éditer (304) la première commande,
c) afficher un premier symbole qui est représentatif de la première commande sur une interface utilisateur graphique (110),
d) relier sur l'interface utilisateur graphique le premier symbole à au moins un second symbole, le second symbole étant représentatif d'une seconde commande de la liste hiérarchique prédéfinie de commandes,
le centre d'exploitation et de maintenance comprenant en outre :
- des moyens (312) pour créer un fichier en langage de balisage qui est descriptif de la macro,
- des moyens (312) pour stocker le fichier en langage de balisage.

8. Centre d'exploitation et de maintenance selon la revendication 7, comprenant un composant serveur (104) et un composant client (106), le composant client étant adapté pour stocker les fichiers en langage de balisage.

9. Système de télécommunication comprenant un réseau de télécommunications (102) et un centre d'exploitation et de maintenance (104, 106) pour l'exécution de commandes relatives à l'exploitation et à la maintenance du réseau de télécommunication, le centre d'exploitation et de maintenance comprenant :
- des moyens (108, 110, 112, 116, 118; 200, 206, 234, 236) pour entrer un ensemble de commandes pour définir une macro, les moyens pour entrer comprenant les moyens pour :
a) sélectionner (302) une première commande (312) parmi une liste hiérarchique prédéfinie de commandes,
b) éditer (304) la première commande,
c) afficher un premier symbole qui est représentatif de la première commande sur une interface utilisateur graphique (110),
d) relier sur l'interface utilisateur graphique le premier symbole à au moins un second symbole, le second symbole étant représentatif d'une seconde commande de la liste hiérarchique prédéfinie de commandes,
le centre d'exploitation et de maintenance comprenant en outre :
- des moyens (312) pour créer un fichier en langage de balisage qui est descriptif de la macro,
- des moyens (312) pour stocker le fichier en langage de balisage.
